# EUROPÄISCHE PATENTSCHRIFT

(11) **EP 0 481 956 B1**
(45) Veröffentlichungstag und Bekanntmachung des Hinweises auf die Patenterteilung: **10.01.1996**
(21) Anmeldenummer: 91890241.2
(22) Anmeldetag: 10.10.1991
(51) Int. Cl.: C21C 5/56, C21B 5/00, F27D 17/00, C22B 1/00

(54) **Verfahren und Anlage zur Herstellung von flüssigem Stahl aus Schrott**
Process and arrangement for the production of liquid steel from scrap
Procédé et installation pour la production de l'acier liquide à partir de ferailles

(30) Priorität: 16.10.1990 AT 2086/90
(43) Veröffentlichungstag der Anmeldung: 22.04.1992
(73) Patentinhaber: VOEST-ALPINE Industrieanlagenbau GmbH, A-4020 Linz (AT)
(72) Erfinder: Pirklbauer, Wilfried, Dipl.-Ing. Dr., A-4491 Niederneukirchen (AT); Weber, Alfred, A-4222 St. Georgen (AT)
(74) Vertreter: Wolfram, Gustav, Dipl.-Ing.

(56) Entgegenhaltungen:
- DE-A- 3 642 103
- DE-C- 3 841 835
- GB-A- 2 064 743
- GB-A- 2 166 723
- US-A- 3 645 515

## Beschreibung

Die Erfindung betrifft ein Verfahren zur Reinigung von bei der Stahlherstellung anfallenden Abgasen, wobei der flüssige Stahl oder ein Stahlvorprodukt aus mit brennbaren müllähnlichen Substanzen verunreinigtem Schrott und gegebenenfalls flüssigen Einsatzstoffen, insbesondere aus Automobilschrott, durch Erhitzen und Einschmelzen in einem metallurgischen Einschmelzgefäß hergestellt wird, sowie eine Anlage zur Durchführung des Verfahrens.

Ein Problem in der Stahlindustrie stellt die Verwertung von Schrott dar, der durch Abtragung oder Zerstörung bereits genutzter Objekte und Geräte, z.B. als Konsumschrott, anfällt.

Konsumschrott, insbesondere Autoschrott, ist durch einen hohen Anteil an organischen Verunreinigungen, wie brennbaren müllähnlichen Substanzen in fester oder flüssiger Form, und nichteisenmetallischen Begleitstoffen charakterisiert und ist daher nur mit großem Aufwand zu verarbeiten. Derzeit ist es üblich, Schrott in Elektrolichtbogenöfen, Kupol- und Hochofenöfen und in Sauerstoffkonvertern zu schmelzen. Für minderwertigen Konsumschrott eignen sich jedoch nur Kupol- und Hochöfen.

Ein besonderes Problem stellen die organischen Beimengungen in Form von Kunststoffen dar, die beim Erhitzen umweltbelastende gesundheitsschädigende Abgase freisetzen, die Dioxin, Furan und höhere Kohlenwasserstoffe enthalten. Ein weiteres Problem stellen Verunreinigungen, wie Schwefel, dar, der ebenfalls mit den Abgasen die Umwelt belastet.

Ein weiteres Problem ist darin zu sehen, daß aus dem Einschmelzprozeß entstehende feste oder flüssige Abfallprodukte anfallen, die teilweise nur sehr schwer oder gar nicht verwertbar sind, so daß ihre Deponie oftmals unumgänglich ist. Schwefel- und chlorhältige Produkte stellen Sondermüll dar und erfordern einen entsprechenden Mehraufwand bei der Entsorgung.

Die Erfindung stellt sich die Aufgabe, diese Nachteile und Schwierigkeiten zu vermeiden und ein Verfahren der eingangs angegebenen Art sowie eine Anlage zur Durchführung des Verfahrens zu schaffen, bei denen eine Entsorgung der Schadstoffe in kostengünstiger Weise möglich ist und wobei keine zusätzlichen Deponieprodukte anfallen sowie entstehende Abgase frei sind von die Umwelt belastenden Verunreinigungen.

Diese Aufgabe wird erfindungsgemäß dadurch gelöst, daß das beim Einsetzen des Schrotts in das metallurgische Einschmelzgefäß sowie das beim Erhitzen und beim Einschmelzen des Schrotts entstehende Gas nach einer Konditionierung auf einen Temperaturbereich zwischen 1000 und 1500°C als Heizgas unter Abgabe seiner fühlbaren Wärme in einem Kalkbrennverfahren mit bewegtem Kalk-Festbett eingesetzt wird, wobei schwefel- und chlorhaltige Bestandteile des Heizgases am gebrannten Kalk absorbiert und der im Heizgas enthaltene Staub im Kalk-Festbett abgeschieden wird und das beim Durchtritt durch das Kalk-Festbett gereinigte und abgekühlte Heizgas nachfolgend in einer Filteranlage endgereinigt wird.

Das erfindungsgemäße Verfahren ermöglicht die Entsorgung der Schadstoffe des Abgases bei gleichzeitiger optimaler thermischer Nutzung mit einer Anlagenkomponente, nämlich einem Kalkbrennofen, der ohnehin in jedem Stahlwerk vorhanden ist, da gebrannter Kalk bei metallurgischen Aggregaten zur Schlackenbildung eingesetzt wird.

Gemäß der GB-A-2 166 723 wird Kalkstein in geschlossenen Fördereinrichtungen zickzackförmig im Gegenstrom zu einem Abgasstrom durch eine Brennkammer geführt und dabei gebrannt. Ein direkter Kontakt zwischen Abgas und Kalkstein ist dabei unmöglich.

Die im beim Schrotteinschmelzen entstehenden Abgas enthaltenen PCDD (polychlorierte Dibenzodioxine) und PCDF (polychlorierte Dibenzofurane) und höheren Kohlenwasserstoffe werden bei der Konditionierung dieses Gases auf einen Temperaturbereich zwischen 1000 und 1500°C zersetzt. Das so von diesen Stoffen gereinigte Heizgas, welches vor Einleiten in das bewegte Kalk-Festbett eine Temperatur zwischen 800 und 1000°C aufweist, gibt seine fühlbare Wärme unter Vermeidung einer "de novo Synthese" im Kalk-Festbett ab, so daß eine Zersetzung des chargierten Kalksteins in CaO und CO₂ stattfindet.

Dabei werden gleichzeitig die schwefel- und chlorhältigen Bestandteile des Abgases (z.B. SO₂ und HCl) am gebrannten Kalk absorbiert, und wird auch eine hocheffiziente Staubabscheidung im bewegten Kalk-Festbett erreicht, so daß das Gas von Ruß, Schwermetallaerosolen, FeO etc. gereinigt ist.

Somit ermöglicht das erfindungsgemäße Verfahren eine optimale Entsorgung des Schrotts mit minimalem Investitionsaufwand, wobei in der Praxis seit langem erprobte Anlagenkomponenten, wie z.B. ein Gleichstrom-Regenerativ-Schachtofen, verwendet werden können.

Da Dioxine und Furane schon bei relativ niedrigen Temperaturen entstehen, wird zweckmäßig im Falle einer Schrottvorwärmung außerhalb des metallurgischen Einschmelzgefäßes das bei einer solchen Vorwärmung entstehende Abgas mit dem beim Einschmelzen des Schrotts im metallurgischen Gefäß entstehenden Gas vermischt und mit diesem gemeinsam als Heizgas im Kalkbrennverfahren eingesetzt.

Zweckmäßig wird das Heizgas nach der Konditionierung auf einen Temperaturbereich zwischen 1000 und 1500°C in einer Mischkammer homogenisiert und ausreagiert.

Nach einer besonders vorteilhaften Ausführungsform wird der in der Filteranlage anfallende Staub gemeinsam mit dem beim Kalkbrennverfahren anfallenden Staub und Feinkalk in das Einschmelzgefäß als Schlackenbildner rückgeführt, wobei zweckmäßig der Staub in das Einschmelzgefäß eingeblasen wird.

Gemäß einer weiteren bevorzugten Ausführungsform wird der Staub brikettiert und werden die Briketts gegebenenfalls gemeinsam mit Stückkalk in das Einschmelzgefäß chargiert. Falls Schrott mit einem hohen Anteil an verzinktem Blech eingesetzt wird, kann es zweckmäßig sein, die aus dem Staub geformten Briketts einer Zinkhütte zuzuführen. Dies ist insbesondere dann vorteilhaft, wenn der Zinkgehalt im Staub über 20 % liegt.

Um eine einwandfreie Gasführung zu gewährleisten, wird zweckmäßig das Heizgas mittels eines der Endfilterung nachgeordneten Saugzuggebläses aus dem Einschmelzgefäß abgesaugt und durch das Kalk-Festbett hindurchbewegt. Das Saugzuggebläse ist hierbei an der kalten Seite der Gasführung vorgesehen, so daß die hiermit verbundenen Investitionskosten nicht allzu hoch sind und eine lange Lebensdauer des Saugzuggebläses gewährleistet ist.

Eine Anlage zur Durchführung des Verfahrens mit einem von einer Einhausung mit Absaugleitung umgebenen metallurgischen Einschmelzgefäß, welches mit einer Abgasleitung versehen ist und mit Brennern in der Absaugleitung, ist dadurch gekennzeichnet, daß die Abgasleitung in die Absaugleitung der Einhausung mündet und gegebenenfalls eine ein sauerstoffhältiges Gas einbringende Leitung in die Absaugleitung mündet, daß in der Absaugleitung ein Thermoreaktor oder ein Heißgaszyklon vorgesehen ist und die Absaugleitung in einen Schacht-Kalkofen mit einem bewegten Kalk-Festbett mündet und eine Absaugleitung von dem Schacht-Kalkofen über eine Filteranlage zu einem Saugzuggebläse und weiter zu einem Kamin führt.

Der Thermoreaktor weist in seinem Inneren Leiteinrichtungen auf, die die Gasmoleküle zwingen, beim Durchströmen durch den Thermoreaktor ständig ihre Richtung zu ändern. Anstelle eines Thermoreaktors kann auch ein Heißgaszyklon vorgesehen sein, in den von verschiedenen Stellen ausgehend das konditionierte Gas eingedüst wird, so daß es innig durchmischt wird.

Vorzugsweise führt vom Schacht-Kalkofen und von der Filteranlage jeweils eine Staubabführungsleitung zu einem Staubsilo, wobei zweckmäßig eine Staubrückführungsleitung vom Staubsilo zum Einschmelzgefäß führt oder gemäß einer weiteren bevorzugten Ausführungsform dem Staubsilo eine Brikettieranlage nachgeordnet ist, von der eine Fördereinrichtung zum Fördern der Briketts zum Einschmelzgefäß führt.

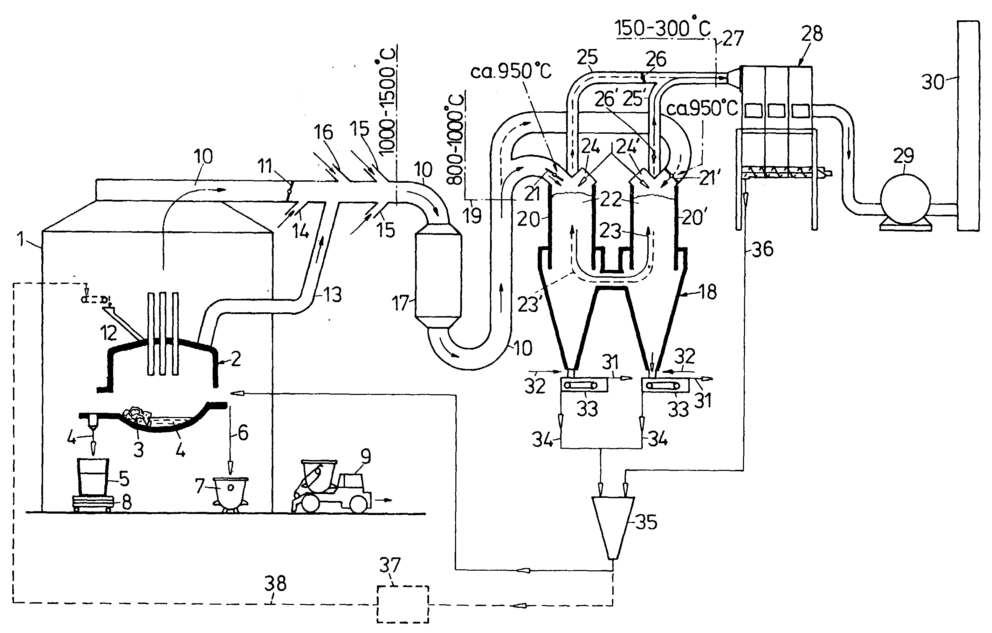

Die Erfindung ist nachfolgend anhand eines in der Zeichnung dargestellten Ausführungsbeispieles näher erläutert, wobei die Zeichnung eine Anlage zur Durchführung des Verfahrens in schematischer Darstellung zeigt.

In einer allseits geschlossenen Einhausung 1 ist ein Elektroschmelzofen 2 vorgesehen, in den vorgewärmter Schrott 3 chargiert wird. Der aus dem eingeschmolzenen Schrott 3 gebildete flüssige Stahl 4 bzw. das flüssige Stahlvorprodukt wird in eine Stahlgießpfanne 5 abgegossen. Die Schlacke 6 wird in einem Schlackenkübel 7 gesammelt. Zum Chargieren des Schrotts 3 und Ein- und Ausfahren der auf einem Transportwagen 8 angeordneten Stahlgießpfanne 5 bzw. zum Entfernen des Schlackenkübels 7 mittels eines Schlackenkübeltransportfahrzeuges 9 weist die Einhausung 1 nicht näher dargestellte verschließbare Tore auf.

Die Einhausung 1 ist an ihrer Decke mit einer Absaugleitung 10 versehen, die mit einer Klappe 11 verschließbar ist. Vom Deckel 12 des Einschmelzgefäßes 2 geht eine Abgasleitung 13 aus, die in die Absaugleitung 10 der Einhausung 1 mündet. In die Absaugleitung mündet weiters eine Abgase von einer gegebenenfalls vorgesehenen Schrottvorwärmungseinrichtung transportierende Abgasleitung 14.

In der Absaugleitung 10 sind nach dem Einmünden der Abgasleitungen 13 und 14 Brenner 15 bzw. Gaszuführungen 16 zur Zuleitung von reinem Sauerstoff oder sauerstoffhältigem Gas vorgesehen, mit deren Hilfe die Temperatur der Abgase auf 1000 bis 1500°C, vorzugsweise 1200 bis 1500°C, konditioniert werden kann. Die Absaugleitung 10 mündet in einen Thermoreaktor 17, in dem die Abgase zur Erzielung einer vollständigen Verbrennung bzw. zur Erzielung einer vollständigen Reaktion der Gasbestandteile durchmischt werden. Der Thermoreaktor weist im Inneren nicht näher dargestellte Leitbleche aus hochwarmfestem Stahl auf, welche Leitbleche das Gas zu einer oftmaligen Richtungsänderung und damit zu einer guten Durchmischung zwingen.

Dem Thermoreaktor 17 nachgeordnet ist ein Zweischacht-Regenerativ-Kalkofen 18, wobei das über die Absaugleitung 10 zugeführte Abgas, welches gegebenenfalls nach dem Thermoreaktor 17 einer weiteren Konditionierung bei 19 auf einen Temperaturbereich von 800 bis 1000°C unterworfen wird, einmal in den einen und einmal in den anderen Schacht 20, 20' des Zweischacht-Regenerativ-Kalkofens 18 als Heizgas eingeleitet wird und (je nach Stellung der Klappen 21, 21') das aus chargiertem Kalkstein gebildete bewegte Festbett 22 in Richtung der Pfeile 23 bzw. 23' durchströmt. Jeder Schacht 20, 20' des Kalkofens 18 weist eine eigene Chargieröffnung 24, 24' für den Kalkstein und eine Absaugleitung 25, 25' für im Kalkofen 18 entstehendes Abgas auf.

Die Absaugleitungen 25, 25', die mittels Klappen 26, 26' wahlweise absperrbar sind, münden nach einer gegebenenfalls vorgesehenen Konditionierung (bei 27), bei der das mit einer Temperatur zwischen 150 und 750°C aus dem Kalkbrennofen austretende Abgas auf einen Temperaturbereich zwischen 150 und 300°C durch H₂O-Eindüsung eingestellt wird, in eine Filteranlage 28 zur Endreinigung. Von der Filteranlage 28 ausgehend wird das gereinigte Abgas mittels eines Saugzuggebläses 29 einem Kamin 30 zugeführt.

Diese Wahl der Filteranlage 28 ist in hohem Maß von der gewählten Kalkerzeugungsleistung abhängig, da eine mögliche Kondensatbildung bei niedrigen Reingastemperaturen zu beachten ist. Z.B. ist bei Verwendung eines E-Filters anstelle eines Puls-Jet-Filters durch die höhere Eintrittstemperatur in die Filteranlage eine Kondensatabscheidung praktisch unwahrscheinlich.

Am unteren Ende jedes Schachtes 20, 20' des Kalkbrennofens 18 wird der Kalk 31 nach Durchleiten von Kühlluft 32 aus dem Kalkofen 18 ausgetragen, wobei mittels einer nachgeschalteten Absiebung 33 der durch Abrieb entstandene Feinkalk 34 mit dem aus dem Abgas ausgefilterten Staub abgetrennt und in einem Staubsilo 35 zwischengelagert wird. In den Silo 35 wird weiters der in der Filteranlage 28 abgeschiedene Staub 36 eingebracht.

Der so gebrannte Kalk kann prinzipiell bei allen metallurgischen Aggregaten (z.B. im E-Ofen, KVA-Schrottschmelzreaktor, LD-Tiegel, EOF, etc.) zur Schlackenbildung eingesetzt werden.

Der im Staubsilo 35 gesammelte Staub wird entweder in das Einschmelzgefäß 2 eingeblasen oder in einer Brikettieranlage 37 brikettiert, und es werden die Briketts gemeinsam mit Stückkalk dem Chargiergut zugegeben, wie dies mit strichlierter Linie 38 dargestellt ist. Ist der Staub stark zinkhältig (mehr als 20 %), wird er vorzugsweise einer Zinkhütte überbracht.

Nachfolgend ist die Einschmelzung von Schrott anhand eines Ausführungsbeispieles näher erläutert:

In das Einschmelzgefäß 2 wurde folgende Schrottqualität chargiert:
25 % Autopakete (65 % Fe, 30 % brennbare müllähnliche Substanzen)
35 % Stückschrott (98 % Fe, 1 % brennbare müllähnliche Substanzen)
25 % Schwerschrott (95 % Fe, 3 % brennbare müllähnliche Substanzen)
15 % Späne (90 % Fe, 5 % brennbare müllähnliche Substanzen)

Das aus dem Einschmelzgefäß 2 austretende Abgas wies eine Temperatur zwischen 800 und 1000°C auf (diese Temperatur liegt bei Verwendung eines KVA-Gefäßes anstelle des ELektro-Einschmelzgefäßes 2 infolge der in dem KVA-Gefäß vorgesehenen höheren Schrottsäule niedriger, nämlich bei 400 bis 600°C).

Nach einer Konditionierung des aus dem Einschmelzgefäß 2 austretenden Abgases auf eine Temperatur von 1400°C durch Einleitung von sauerstoffhältigem Gas wies das Abgas folgende Analyse auf:

| | | |
|---|---|---|
| 11 % CO₂ | 17 % H₂O | 66 % N₂ |
| 5 % O₂ | 0,083 % SO₂ | 0,118 % HCl |

Das Abgas fiel in einer Menge von 780 Norm-m³/t Rohstahl an und wies je Norm-m³ Abgas Staub in einer Menge von 16 g mit nachstehender Analyse auf:

| | | | | |
|---|---|---|---|---|
| 30 % ZnO | 20 % CaO | 14 % Na₂O | 10 % SiO₂ | 6 % Fe₂O₃ |
| 3 % PbO | 3 % K₂O | 2 % MnO | 2 % MgO | 2 % CuO |
| 1 % Cr₂O₃ | 1 % Al₂O₃ | 6 % Rest | | |

Das durch den Kamin 30 abgeführte Reingas fiel in einer Menge von 1100 Norm-m³/t Rohstahl an und wies nachstehende Analyse auf:
19% CO₂ 30% H₂O 46% N₂ 4% O₂
weniger als 0,001% SO₂ und HCl

Der Gehalt an Dioxinen, Furanen und höheren Kohlenwasserstoffen lag unter der Nachweisbarkeitsgrenze. Im Reingas waren weniger als 5 mg Staub pro Norm-m³ vorhanden. Die Kalkproduktion betrug 320 kg CaO/t Rohstahl.

## Patentansprüche

1. Verfahren zur Reinigung von bei der Stahlherstellung anfallenden Abgasen, wobei der flüssige Stahl (4) oder ein Stahlvorprodukt aus mit brennbaren müllähnlichen Substanzen verunreinigtem Schrott (3) und gegebenenfalls flüssigen Einsatzstoffen, insbesondere aus Automobilschrott, durch Erhitzen und Einschmelzen in einem metallurgischen Einschmelzgefäß (2) hergestellt wird, dadurch gekennzeichnet, daß das beim Einsetzen des Schrotts (3) in das metallurgische Einschmelzgefäß (2) sowie das beim Erhitzen und beim Einschmelzen des Schrotts (3) entstehende Gas nach einer Konditionierung auf einen Temperaturbereich zwischen 1000 und 1500°C als Heizgas unter Abgabe seiner fühlbaren Wärme in einem Kalkbrennverfahren mit bewegtem Kalk-Festbett (22) eingesetzt wird, wobei schwefel- und chlorhältige Bestandteile des Heizgases am gebrannten Kalk absorbiert und der im Heizgas enthaltene Staub im Kalk-Festbett (22) abgeschieden wird und das beim Durchtritt durch das Kalk-Festbett (22) gereinigte und abgekühlte Heizgas nachfolgend in einer Filteranlage (28) endgereinigt wird.

2. Verfahren nach Anspruch 1, dadurch gekennzeichnet, daß der Schrott (3) außerhalb des metallurgischen Einschmelzgefäßes (2) vorgewärmt wird und dabei entstehendes Abgas mit dem beim Einschmelzen entstehenden Gas vermischt und mit diesem gemeinsam als Heizgas im Kalkbrennverfahren eingesetzt wird.

3. Verfahren nach Anspruch 1 oder 2, dadurch gekennzeichnet, daß das Heizgas nach der Konditionierung auf einen Temperaturbereich zwischen 1000 und 1500°C in einer Mischkammer (17) homogenisiert und ausreagiert wird.

4. Verfahren nach einem oder mehreren der Ansprüche 1 bis 3, dadurch gekennzeichnet, daß der in der Filteranlage (28) anfallende Staub (36) gemeinsam mit dem beim Kalkbrennverfahren anfallenden Staub und Feinkalk (34) in das Schmelzgefäß (2) als Schlackenbildner rückgeführt wird.

5. Verfahren nach Anspruch 4, dadurch gekenzeichnet, daß der Staub (34, 36) in das Einschmelzgefäß (2) eingeblasen wird.

6. Verfahren nach Anspruch 4, dadurch gekennzeichnet, daß der Staub (34, 36) brikettiert wird und die Briketts gegebenenfalls gemeinsam mit Stückkalk in das Einschmelzgefäß (2) chargiert wird.

7. Verfahren nach einem oder mehreren der Ansprüche 1 bis 6, dadurch gekennzeichnet, daß das Heizgas mittels eines der Endfilterung nachgeordneten Saugzuggebläses (29) aus dem Einschmelzgefäß (2) abgesaugt und durch das Kalk-Festbett (22) hindurchbewegt wird.

8. Anlage zur Durchführung des Verfahrens nach einem oder mehreren der Ansprüche 1 bis 7, mit einem von einer Einhausung (1) mit Absaugleitung (10) umgebenen metallurgischen Einschmelzgefäß (2), welches mit einer Abgasleitung (13) versehen ist und mit Brennern (15) in der Absaugleitung (10), dadurch gekennzeichnet, daß die Abgasleitung (13) in die Absaugleitung (10) der Einhausung (1) mündet und gegebenenfalls eine ein sauerstoffhältiges Gas einbringende Leitung (16) in die Absaugleitung (10) mündet, daß in der Absaugleitung (10) ein Thermoreaktor oder ein Heißgaszyklon (17) vorgesehen ist und die Absaugleitung (10) in einen Schacht-Kalkofen (18) mit einem bewegten Kalk-Festbett (22) mündet und eine Absaugleitung (25, 25') von dem Schacht-Kalkofen (18) über eine Filteranlage (28) zu einem Saugzuggebläse (29) und weiter zu einem Kamin (30) führt.

9. Anlage nach Anspruch 8, dadurch gekennzeichnet, daß vom Schacht-Kalkofen (18) und von der Filteranlage (28) jeweils eine Staubabführungsleitung zu einem Staubsilo (35) führt.

10. Anlage nach Anspruch 9, dadurch gekennzeichnet, daß eine Staubrückführungsleitung vom Staubsilo (35) zum Einschmelzgefäß (2) führt.

11. Anlage nach Anspruch 9, dadurch gekennzeichnet, daß dem Staubsilo (35) eine Brikettieranlage (37) nachgeordnet ist, von der eine Fördereinrichtung (38) zum Fördern der Briketts zum Einschmelzgefäß (2) führt.

## Claims

1. A process of purifiying offgases incurred at the production of steel, wherein the liquid steel (4) or a steel pre-product of scrap (3) contaminated with combustible, waste-like substances and optionally liquid charging substances, in particular of motorcar scrap, is produced by heating and melting in a metallurgical meltdown vessel (2), characterised in that the gas forming when the scrap (3) is charged into the metallurgical meltdown vessel (2) as well as when the scrap (3) is heated and melted, after having been conditioned to a temperature range of between 1000 and 1500°C, is used as a heating gas in a lime burning process having a moving lime fixed bed (22) under release of its sensible heat, wherein sulphur and chlorine containing components of the heating gas are absorbed on the burnt lime and the dust contained in the heating gas is separated in the lime fixed bed (22) and the heating gas which has been purified and cooled-off during its passage through the lime fixed bed (22) subsequently is finally purified in a filtering plant (28).

2. A process according to claim 1, characterised in that the scrap (3) is pre-heated outside of the metallurgical meltdown vessel (2) and the offgas incurred thereat is mixed with the gas forming druing melting and is used together with the same as heating gas in the lime burning process.

3. A process according to claim 1 or 2, characterised in that the heating gas, after having been conditioned to a temperature range of between 1000 and 1500°C, is homogenized in a mixing chamber (17) and is completely reacted.

4. A process according to one or several of claims 1 to 3, characterised in that the dust (36) incurred in the filtering plant (28), together with the dust incurred in the lime-burning process and including fine lime (34), is recycled into the meltdown vessel (2) as a slag-former.

5. A process according to claim 4, characterised in that the dust (34, 36) is blown into the meltdown vessel (2).

6. A process according to claim 4, characterised in that the dust (34, 36) is briquetted, and the the briquets, optionally together with lump lime, are charged into the meltdown vessel (2).

7. A process according to one or several of claims 1 to 6, characterised in that the heating gas is sucked off from the meltdown vessel (2) by means of an induction draught ventilator (29) arranged to follow the final filtering and is moved through the lime fixed bed (22).

8. An installation for carrying out the process according to one or several of claims 1 to 7, including a metallurgical meltdown vessel (2) surrounded by an enclosure (1) with an exhaust duct (10), which meltdown vessel is provided with an offgas duct (13) and with burners (15) in the exhaust duct (10), characterised in that the offgas duct (13) enters into the exhaust duct (10) of the enclosure (1) and optionally a duct (16) introducing oxygen-containing gas enters into the exhaust duct (10), that in the exhaust duct (10) a thermoreactor or a hot gas cyclone (17) is provided and the exhaust duct (10) enters into a lime shaft kiln (18) having a moved lime fixed bed (22), and an exhaust duct (25, 25') leads from the shaft lime kiln (18) via a filtering plant (28) to an induction draught ventilator (29) and further on to a stack (30).

9. An installation according to claim 8, characterised in that a dust evacuation duct leads from each of the shaft lime kiln (18) and from the filtering plant (28) to a dust bin (35).

10. An installation according to claim 9, characterised in that a dust recycling duct leads from the dust bin (35) to the meltdown vessel (2).

11. An installation according to claim 9, characterised in that a briquetting plant (37) is arranged to follow the dust bin (35), a conveying means (38) for conveying the briquets leading from the briquetting plant to the meltdown vessel (2).

## Revendications

1. Procédé de purification des fumées produites lors de la production d'acier, dans lequel on produit l'acier liquide (4), ou un avant-produit de l'acier, à partir de ferrailles (3) polluées par des substances combustibles du type ordures et éventuellement d'additifs fluides, en particulier de ferrailles d'automobiles, par chauffage et mise en fusion dans un récipient métallurgique de mise en fusion (2), caractérisé par le fait que les fumées apparaissant lors de l'introduction des ferrailles (3) dans le récipient métallurgique de mise en fusion (2) ainsi que lors du réchauffage et de la mise en fusion des ferrailles (3), sont, après un conditionnement pour les porter sur une plage de température entre 1000 et 1500°C, employées comme gaz de chauffage, avec émission de leur chaleur sensible, dans un procédé de combustion du calcaire à lit calcaire fixe (22), agité, procédé dans lequel les composants à teneur de soufre et de chlore du gaz de chauffage sont absorbés sur la chaux résultant de la combustion et la poussière contenue dans le gaz de chauffage se dépose dans le lit de calcaire fixe (22) et dans lequel le gaz de chauffage, purifié et refroidi par son passage à travers le lit de calcaire fixe (22), subit ensuite une purification finale dans une installation de filtration (28).

2. Procédé selon la revendication 1, caractérisé par le fait que l'on préchauffe les ferrailles (3) en dehors du récipient métallurgique de mise en fusion (2), que l'on mélange les fumées qui y apparaissent avec les fumées apparaissant lors de la mise en fusion et qu'on les emploie, en commun avec celles-ci, comme gaz de chauffage dans le procédé de combustion du calcaire.

3. Procédé selon la revendication 1 ou 2, caractérisé par le fait qu'après conditionnement pour le porter sur une plage de température entre 1000 et 1500°C, on homogénéise le gaz de chauffage dans une chambre de mélange (17) et on l'y fait réagir.

4. Procédé selon une ou plusieurs des revendications 1 à 3, caractérisé par le fait qu'en commun avec la poussière apparaissant lors du procédé de combustion du calcaire et avec de la chaux fine (34), on renvoie dans le récipient de mise en fusion (2), en tant qu'adjuvant de formation du laitier, la poussière (36) apparaissant dans l'installation de filtration (28).

5. Procédé selon la revendication 4, caractérisé par le fait que l'on envoie par soufflage la poussière (34, 36) dans le récipient de mise en fusion (2).

6. Procédé selon la revendication 4, caractérisé par le fait que l'on agglomère la poussière (34, 36) en briquettes et qu'on charge les briquettes dans le récipient de mise en fusion (2), éventuellement en commun avec de la chaux en vrac.

7. Procédé selon l'une ou plusieurs des revendications 1 à 6, caractérisé par le fait que l'on aspire le gaz de chauffage hors du récipient de mise en fusion (2) au moyen d'un ventilateur d'extraction (29) disposé en aval de l'installation de filtration finale et qu'on le fait passer à travers le lit de calcaire fixe (22).

8. Installation pour la mise en oeuvre du procédé selon une ou plusieurs des revendications 1 à 7, comportant un récipient métallurgique de mise en fusion (2) qui est entouré d'une enceinte (1) avec conduite d'aspiration (10), et qui est muni d'une conduite (13) d'évacuation des fumées, ainsi que des brûleurs (15) dans la conduite d'aspiration (10), caractérisée par le fait que la conduite (13) d'évacuation des fumées débouche dans la conduite d'aspiration (10) de l'enceinte et qu'éventuellement une conduite (16) amenant un gaz à teneur d'oxygène débouche dans la conduite d'aspiration (10), que dans la conduite d'aspiration (10) est prévu un thermoréacteur ou un cyclone (17) pour le gaz de chauffage et que la conduite d'aspiration (10) débouche dans un four à chaux (18) à cuves à lit de calcaire fixe (22), agité, et qu'une conduite d'aspiration (25, 25') conduit, depuis le four à chaux (8) à cuves, à un aspirateur d'extraction (29) en passant par une installation de filtration (28), puis à une cheminée (30).

9. Installation selon la revendication 8, caractérisé par le fait que du four à chaux (8) à cuves et de l'installation de filtration (28), une conduite d'évacuation de la poussière conduit chaque fois à un silo à poussière (35).

10. Installation selon la revendication 9, caractérisée par le fait qu'une conduite de retour de la poussière conduit du silo à poussière (35) au récipient de mise en fusion (2).

11. Installation selon la revendication 9, caractérisée par le fait qu'à la suite du silo à poussière (35) est disposée une installation d'agglomération en briquettes (37) d'où un dispositif de transport (38), prévu pour le transport des briquettes, conduit au récipient de mise en fusion (2).
